# EUROPEAN PATENT APPLICATION

(11) **EP 3 531 518 A1**
(43) Date of publication of application: **28.08.2019**
(21) Application number: 18158486.3
(22) Date of filing: 23.02.2018
(51) Int. Cl.: H02B 13/025

(54) **EXHAUST GAS DUCT FOR GAS-INSULATED SWITCHGEAR AND GAS-INSULATED SWITCHGEAR HAVING AN EXHAUST GAS DUCT**

(71) Applicant: Nuventura GmbH, 12681 Berlin (DE)
(72) Inventor: Ramesh, Manjunath, 13055 Berlin (DE)
(74) Representative: Tongbhoyai, Martin

(57) **Abstract**

The invention refers to an exhaust gas duct (6) for a gas-insulated switchgear (1). Moreover, the invention refers to a gas-insulated switchgear (1) comprising at least one aforementioned exhaust gas duct (6). The exhaust gas duct (6) comprises a first wall unit (9), a second wall unit (12), a frame unit (13) arranged at the first wall unit (9) and at the second wall unit (12), an interior space (14) composed by the first wall unit (9), the second wall unit (12) and the frame unit (13), wherein the frame unit (13) has a first side and a second side, wherein the first side of the frame unit (13) is opposite to the second side of the frame unit (13), wherein the first side of the frame unit (13) is directed to the interior space (14) and is adjacent to the interior space (14), and wherein at least one door unit (10, 11) is arranged at the first side of the frame unit (13).

## Description

### TECHNICAL FIELD

The invention refers to an exhaust gas duct for a gas-insulated switchgear. Moreover, the invention refers to a gas-insulated switchgear comprising at least one aforementioned exhaust gas duct.

A switchgear serves as an interface between an electrical supply and an electrical load. A known switchgear for medium voltage, for example 1 kV to 52 kV and/or high voltage, for example 52 kV to 1,200 kV is usually a gas-insulated switchgear (also known as GIS). A known GIS comprises a cable compartment, a busbar compartment, a low-voltage compartment, a gas-insulated tank and an exhaust gas duct.

The cable compartment is a part of the known GIS in which, for example, underground electric cables are connected to the known GIS. The cable compartment is also used to connect electrical loads such as generators, transformers and other loads to each other. Moreover, the cable compartment may comprise current transformers and voltage transformers.

The busbar compartment of the known GIS comprises busbars. A busbar is typically a copper or aluminium electrical conductor which is used to connect the known GIS to other electrical equipment such as generators, transformers and electrical loads. The busbar is arranged, for example, in a gas-insulated tank or is insulated by using a solid insulation covering or encapsulating the busbar.

The low-voltage compartment of the known GIS comprises control equipment such as relays, auxiliary switches and actuators typically operating at low voltages (less than 1 kV).

The gas-insulated tank of the known GIS comprises a circuit breaker and a disconnector unit, for example for one phase, for two phases or for three phases. The circuit breaker is connected to a first electrical conductor guided into the gas-insulated tank. The disconnector unit is used for connecting or disconnecting the circuit breaker to a second electrical conductor such as a busbar guided to the busbar compartment or the cable compartment in no-load conditions only. The disconnector unit is used for electrical isolation and grounding during service and maintenance of the known GIS. The circuit breaker is operated to break the current during a normal load condition as well as during a failure in a voltage network in which the known GIS is used. The failure may be a high surge current due to a short circuit or due to a lightning strike to the voltage network. The gas-insulated tank of the known GIS also comprises an insulating fluid in the form of sulfur hexafluoride (SF₆) or other gases in specific applications. The use of SF₆ allows for a compact design of the known GIS since SF₆ has good properties with respect to dielectric performance and thermal performance, in particular preventing and dealing with unwanted electric discharges, for example arcs, as well as heat dissipation in the known GIS. However, SF₆ is a fluorinated gas with a high global warming potential. Therefore, it is not desirable to use SF₆. Rather, other insulation fluids should be used.

The exhaust gas duct of the known GIS comprises an exhaust path for the removal of hazardous and hot gases generated in case of any fault or abnormal condition within the known GIS. The exhaust path is connected to the outside environment using ducts.

The construction of the exhaust gas duct depends on the requirement with respect to the protection class which the GIS has been assigned to. If, for example, the requirements of the AFL class of protection (Access to Front and Lateral) have to be fulfilled and in case of any unwanted internal arc event inside the gas-insulated tank, no protection is guaranteed and/or provided for personnel staying at the rear end of the GIS.

However, if, for example, the requirements of an AFLR class of protection (Access to Front, Lateral and Rear) have to be fulfilled and in case of any unwanted internal arc event inside the gas-insulated tank, protection has to be provided for personnel staying at the rear end of the GIS. The exhaust gas duct is arranged at the rear end of the known GIS to protect personnel staying at the rear end of the known GIS. The known GIS comprises pressure relief valves at the gas-insulated tank and pressure flaps arranged at the cable compartment. The pressure relief valves and the pressure flaps are configured to open to the rear end of the known GIS and, therefore, to the exhaust gas duct. If an exhaust gas is generated due to an internal arc event either in the cable compartment or in the gas-insulated tank, the exhaust gas is guided through the exhaust gas duct towards the roof of the known GIS and is guided to the room in which the known GIS is arranged or is guided out of a building.

The construction of an exhaust gas duct requires an airtight sealing such that there is no gas flow outside of the exhaust gas duct apart from the gas flow upwards to the roof of the GIS. Moreover, during an internal arc event, exhaust gas should not flow out of the exhaust gas duct at a height less than 1.6 m. Furthermore, since the exhaust gas expands in volume after flowing out of the pressure valves after an internal arc event, the pressure inside the exhaust gas duct may increase up to 1 bar, up to 2 bar or even more within 10 to 50 µs. Therefore, all joints of the exhaust gas duct should be welded or bolted together with a sealing to ensure that no exhaust gas leaves the exhaust gas duct apart from through the opening in the roof of the GIS.

The construction of the gas-insulated tank of the known GIS follows the same principles. As mentioned above, the gas-insulated tank is pressurized using an insulating gas, typically SF₆. Since SF₆ is the most potential global warming gas, EU legislation, for example, limits the leakage of SF₆ in medium-voltage switchgears to 0.1 % per year and 0.5 % per year in high-voltage switchgears. Therefore, sealing of the gas-insulated tank is very important. Therefore, one criterion according to international standards for robustness of such gas-insulated tanks is to ensure a minimum functional pressure until the end of the expected life time. The functional pressure is the minimum pressure which is required for insulation and switching at standard temperature and pressure (20°C and 101.3 kPa).

If a gas-insulated tank is used in a GIS which does not use SF₆ and which uses another environmental friendly insulating gas, it is desirable to obtain an exhaust gas duct which may be used for such a GIS comprising the environmental friendly insulating gas which may provide for additional advantages.

According to the invention, this object is solved by an exhaust gas duct according to claim 1. A gas-insulated switchgear according to the invention comprising at least one exhaust gas duct is given by the features of claim 14. Further features of the invention are evident from the following description, the following claims and/or the accompanying figures.

The exhaust gas duct according to the invention is used for a gas-insulated switchgear (GIS). The exhaust gas duct according to the invention comprises at least one first wall unit and at least one second wall unit. For example, the first wall unit and the second wall unit are made of stainless steel. However, the invention is not restricted to the use of stainless steel for the first wall unit and the second wall unit. Rather, any material suitable for the wall units may be used for the invention.

Moreover, the exhaust gas duct according to the invention comprises at least one frame unit arranged at the first wall unit and at the second wall unit. For example, the frame unit is arranged between the first wall unit and the second wall unit and is attached to both the first wall unit and the second wall unit.

Furthermore, the exhaust gas duct according to the invention comprises at least one interior space composed by the first wall unit, the second wall unit and the frame unit. Additionally, as explained further below, the interior space may be also composed by an removable tank wall of a gas-insulated tank. The frame unit has a first side and a second side, wherein the first side of the frame unit is opposite to the second side of the frame unit, wherein the first side of the frame unit is directed to the interior space and is adjacent to the interior space. The second side of the frame unit is, for example, an outer side of the frame unit. Moreover, the exhaust gas duct according to the invention comprises at least one door unit being arranged at the first side of the frame unit.

If an environmentally friendly gas in terms of global warming is used which does not require a very low leakage rate, for example less than 0.1% per year, the invention provides for an access to a removable tank wall of a gas-insulated tank of the GIS. The removable tank wall of the gas-insulated tank may be removed or opened when the GIS is at a out-of-service condition for maintenance and repair. Since the gas handling is simpler than known from the prior art, there is a possibility for regular maintenance of components of the GIS being arranged in the gas-insulated tank, for example disconnector units and/or vacuum interrupters and/or sensors. Therefore, the invention may provide enhancement of the lifetime of the GIS.

Moreover, the invention provides for using sensors in the gas-insulated tank of the GIS which may be easily maintained or replaced. The sensors provide for predictive maintenance online monitoring of the GIS and monitoring its quality status.

In an embodiment of the exhaust gas duct according to the invention it is additionally or alternatively provided that the door unit is exclusively arranged at the first side of the frame unit. In other words, the door unit is not arranged at, for example not attached to, the first wall unit and the second wall unit. Rather, the door unit is arranged at the first side of the frame unit only. By arranging the door unit exclusively at the first side of the frame unit, the invention provides for the possibility to easily attach the door unit to the first side of the frame unit and to easily remove the door unit from the first side of the door unit, for example by using holding devices of a releasable mounting unit which will be explained in detail further below.

In a further embodiment of the exhaust gas duct according to the invention it is additionally or alternatively provided that the door unit comprises a first side and a second side. The first side and the second side of the door unit are opposite to each other. The first side of the door unit is directed to the interior space and is adjacent to the interior space. The second side of the door unit is arranged at the first side of the frame unit. The first side of the door unit comprises at least one holding device of the releasable mounting unit. For example, the holding device is at least one of: a thread unit and a nut. Additionally or alternatively, the holding device is welded to the first side of the door unit and/or is mechanically arranged at the first side of the door unit.

In another embodiment of the exhaust gas duct according to the invention it is additionally or alternatively provided that the second side of the frame unit comprises at least one mounting device of the releasable mounting unit, wherein the mounting device is arranged at the holding device. For example, the mounting device is a bolt comprising a thread.

In an embodiment of the exhaust gas duct according to the invention it is additionally or alternatively provided that the first side of the door unit comprises at least one first stiffener which stiffens the door unit. For example, the first stiffener is made of steel and is, for example, directly welded to the door unit. The invention is not restricted to a single stiffener. Rather, several stiffeners may be arranged at the first side of the door unit, for example up to 5 stiffeners. The several stiffeners may be arranged at different positions at the first side of the door unit. The number and the position of the stiffeners arranged at the first side of the door unit may be chosen depending on the pressure that needs to be withstood in the exhaust gas duct. If the pressure is rather high, for example up to 2 bar, it is advantageous to arrange at least 3 stiffeners at the first side of the door unit.

In a further embodiment of the exhaust gas duct according to the invention it is additionally or alternatively provided that at least one first baffle unit is arranged at the first stiffener. The first baffle unit may have several functions. On the one hand, the first baffle unit is a mechanical support to withstand the pressure during an internal arc event in the GIS. On the other hand, the first baffle unit may be a sacrificing electrode which burns out during an internal arc event in the GIS, thereby protecting the door unit. The burning out of the first baffle unit absorbs the energy of the exhaust gas dissipating through the exhaust gas duct during an internal arc event in the GIS, thereby reducing the temperature and the velocity of the exhaust gas being guided through the exhaust gas duct. Moreover, the first baffle unit also deflects and guides the direction of the exhaust gas in such a way that the exhaust gas flows through the exhaust gas duct. Additionally, the first baffle unit may have a first end comprising openings. For example, the first end is a perforated end comprising perforations. The first end having the openings reduces the energy of the exhaust gas by acting as an energy absorber and also reduces the velocity of the exhaust gas. The openings in the first end may be embodied as slots. However, the invention is not restricted to slots as the openings. Rather, any kind of opening suitable for the invention may be used.

In an embodiment of the exhaust gas duct according to the invention, it is additionally or alternatively provided that the door unit is a first door unit, wherein the holding device is a first holding device and wherein the releasable mounting unit is a first releasable mounting unit. Moreover, the exhaust gas duct according to the invention comprises at least a second door unit, wherein the second door unit is arranged at the first side of the frame unit.

In a further embodiment of the exhaust gas duct according to the invention, it is additionally or alternatively provided that the second door unit is arranged at the first door unit. For example, the first door unit comprises a door unit surface, a first door connecting unit and a second door connecting unit, wherein the first door connecting unit and the door unit surface are arranged to each other at a first angle different to 0° and 180°, and wherein the first door connecting unit and the second door connecting unit are arranged to each other at a second angle different to 0° and 180°.

Alternatively, the first door unit comprises a door unit surface, a first door connecting unit and a second door connecting unit, wherein the first door connecting unit and the door unit surface are arranged to each other at a first angle different to 0° and 180°, wherein the first door connecting unit and the second door connecting unit are arranged to each other at a second angle different to 0° and 180°, wherein the first door connecting unit and the second door connecting unit form a seating area, and wherein one of the following is given: (i) the second door unit is arranged at the seating area and (ii) the second door unit is adjacent to the seating area.

In a further embodiment of the exhaust gas duct according to the invention, it is additionally or alternatively provided that the first door unit comprises a door unit surface, a first door connecting unit and a second door connecting unit, wherein the first door connecting unit and the door unit surface are arranged to each other at a first angle different to 0° and 180°, wherein the first door connecting unit and the second door connecting unit are arranged to each other at a second angle different to 0° and 180°, wherein the first door connecting unit and the second door connecting unit form a seating area, wherein at least one sealing unit is arranged in the seating area, and wherein the second door unit is adjacent to the seating area.

In another embodiment of the exhaust gas duct according to the invention it is additionally or alternatively provided that the second door unit comprises a first side and a second side. The first side and the second side of the second door unit are opposite to each other. The first side of the second door unit is directed to the interior space and is adjacent to the interior space. The second side of the second door unit is arranged at the first side of the frame unit. The first side of the second door unit comprises at least one second holding device of a second releasable mounting unit. For example, the second holding device is at least one of: a thread unit and a nut. Additionally or alternatively, the second holding device is welded to the first side of the second door unit and/or is mechanically arranged at the first side of the second door unit.

In an embodiment of the exhaust gas duct according to the invention, it is additionally or alternatively provided that the second side of the frame unit comprises at least one second mounting device of the second releasable mounting unit, wherein the second mounting device is arranged at the second holding device. For example, the second mounting device is a bolt comprising a thread.

In a further embodiment of the exhaust gas duct according to the invention it is additionally or alternatively provided that the first side of the second door unit comprises at least one second stiffener which stiffens the second door unit. For example, the second stiffener is made of steel and is, for example, directly welded to the second door unit. The invention is not restricted to a single second stiffener. Rather, several second stiffeners may be arranged at the first side of the second door unit, for example up to 5 second stiffeners. The several second stiffeners may be arranged at different positions at the first side of the second door unit. The number and the position of the second stiffeners arranged at the first side of the second door unit may be chosen depending on the pressure that needs to be withstood in the exhaust gas duct. If the pressure is rather high, for example up to 1 bar or 2 bar, it is advantageous to arrange at least 3 second stiffeners at the first side of the second door unit.

In another embodiment of the exhaust gas duct according to the invention it is additionally or alternatively provided that at least one second baffle unit is arranged at the second stiffener. The second baffle unit may have several functions. On the one hand, the second baffle unit is a mechanical support to withstand the pressure during an internal arc event in the GIS. On the other hand, the second baffle unit may be a sacrificing electrode which burns out during an internal arc event in the GIS, thereby protecting the second door unit. The burning out of the second baffle unit absorbs the energy of the exhaust gas dissipating through the exhaust gas duct during an internal arc event in the GIS, thereby reducing the temperature and the velocity of the exhaust gas being guided through the exhaust gas duct. Moreover, the second baffle unit also deflects and guides the direction of the exhaust gas in such a way that the exhaust gas flows through the exhaust gas duct. Additionally, the second baffle unit may have a second end comprising openings. For example, the second end may be a perforated end comprising a perforation. The second end having the openings reduces the energy of the exhaust gas by acting as an energy absorber and also reduces the velocity of the exhaust gas. The openings in the second end may be embodied as slots. However, the invention is not restricted to slots as the openings. Rather, any kind of opening suitable for the invention may be used.

The invention also refers to a gas-insulated switchgear (GIS) comprising at least one gas-insulated tank. The gas-insulated tank may comprise disconnector units and/or vacuum interrupters and/or sensors. The gas-insulated tank may be filled with a gas different to SF₆. For example, the gas-insulated tank is filled with air. The gas-insulated tank comprises a removable tank wall. Moreover, the gas-insulated switchgear according to the invention comprises at least one exhaust gas duct having at least one of the above-mentioned or below-mentioned features or a combination of at least two of the above-mentioned or below-mentioned features. The removable tank wall of the gas-insulated tank is directed to and is adjacent to the interior space of the exhaust gas duct.

In an embodiment of the gas-insulated switchgear according to the invention, it is additionally or alternatively provided that the removable tank wall of the gas-insulated tank has at least one pressure relief unit. The pressure relief unit is used for guiding exhaust gas out of the gas-insulated tank into the exhaust gas duct such that the exhaust gas is guided to an opening of the exhaust gas duct out of the GIS. Additionally or alternatively, the removable tank wall of the gas-insulated tank has at least one polymeric component comprising at least one communication device. The communication device may be connected to at least one sensor being arranged in the gas-insulated tank. Additionally or alternatively, the removable tank wall is releasably arranged at the gas-insulated tank.

The invention provides for an access to a removable tank wall of the gas-insulated tank of the GIS. This is very helpful if an environmentally friendly gas in terms of global warming is used which does not require a very low leakage rate, for example less than 0.1 % per year. The removable tank wall of the gas-insulated tank may be removed or opened when the GIS is at a out-of-service condition for maintenance and repair. Since the gas handling is simpler than known from the prior art, there is a possibility for regular maintenance of components of the GIS being arranged in the gas-insulated tank, for example disconnector units and/or vacuum interrupters and/or sensors. Therefore, the invention may provide enhancement of the lifetime of the GIS. Moreover, the invention provides for using sensors in the gas-insulated tank of the GIS which may be easily maintained or replaced. The sensors provide for predictive maintenance online monitoring of the GIS and monitoring its quality status.

### BRIEF DESCRIPTION OF THE DRAWINGS

Embodiments of the invention described herein will be explained in more detail in the following text with reference to the figures, in which:
- Figure 1: shows a schematic side view of a first embodiment of a gas-insulated switchgear;
- Figure 2: shows a schematic view of the first embodiment of the gas-insulated switchgear;
- Figure 3: shows a schematic view of the first embodiment of the gas-insulated switchgear comprising an interior space of an exhaust gas duct;
- Figure 4: shows a schematic side view of the interior space of the exhaust gas duct of the gas-insulated switchgear;
- Figure 5: shows a schematic view of a first door unit of the exhaust gas duct;
- Figure 6: shows a further schematic view of the first door unit according to Figure 5;
- Figure 7: shows a schematic view of a second door unit of the exhaust gas duct;
- Figure 8: shows a further schematic view of the second door unit according to Figure 7;
- Figure 9: shows the arrangement of the second door unit to the first door unit of the exhaust gas duct;
- Figure 10: shows the first door unit and the second door unit of the exhaust gas duct;
- Figure 11: shows the arrangement of the first door unit to a frame unit of the exhaust gas duct of the gas-insulated switchgear;
- Figure 12: shows a schematic view of a second embodiment of the gas-insulated switchgear; and
- Figure 13: shows a schematic side view of the second embodiment of the gas-insulated switchgear according to Figure 12.

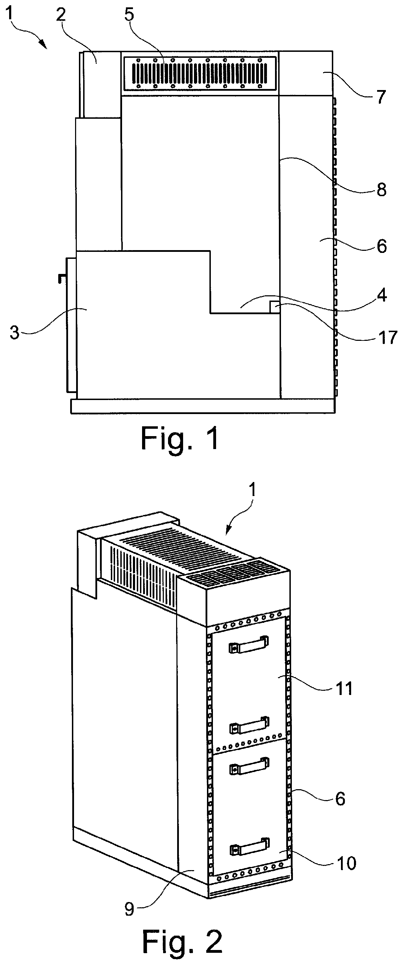

**Figure 1** shows a schematic view of a gas-insulated switchgear (GIS) 1 comprising a low-voltage compartment 2, a cable compartment 3, a gas-insulated tank 4, a busbar compartment 5, an exhaust gas duct 6 and an absorber and outlet 7.

The low-voltage compartment 2 of the GIS 1 comprises control equipment such as relays, auxiliary switches and actuators typically operating at low voltage (less than 1 kV).

The cable compartment 3 of the GIS 1 is used to connect underground electric cables to the GIS 1. The cable compartment 3 is also used to connect electrical loads such as generators, transformers and other loads to each other. The cable compartment 3 may comprise current transformers and voltage transformers.

The gas-insulated tank 4 of the GIS 1 comprises a circuit breaker and a disconnector unit, for example for one phase, for two phases or for three phases. The circuit breaker is connected to a first electrical conductor guided into the gas-insulated tank 4. The disconnector unit is used for connecting or disconnecting the circuit breaker to a second electrical conductor unit such as a busbar guided to the busbar compartment 5 or the cable compartment 3 in no-load conditions only. The disconnector unit is used for electrical isolation and grounding during service and maintenance of the GIS 1. The circuit breaker is operated to break the current during the normal load condition as well as during a failure in a voltage network in which the GIS 1 is used. The failure may be a high surge current due to a short circuit or due to a lightning strike to the voltage network. The gas-insulated tank 4 of the GIS 1 comprises an insulating fluid in the form of air or another gas. However, the gas-insulated tank 4 does not comprise SF₆. The gas-insulated tank 4 comprises a removable tank wall 8 which is directed to the exhaust gas duct 6. This will be explained in detail further below.

The exhaust gas duct 6 of the GIS 1 comprises an exhaust path for the removal of hazardous and hot gases generated in case of any form of abnormal condition within the GIS 1. The exhaust path is connected to the outside environment using ducts. In particular, the exhaust gas duct 6 is connected to the absorber and outlet 7.

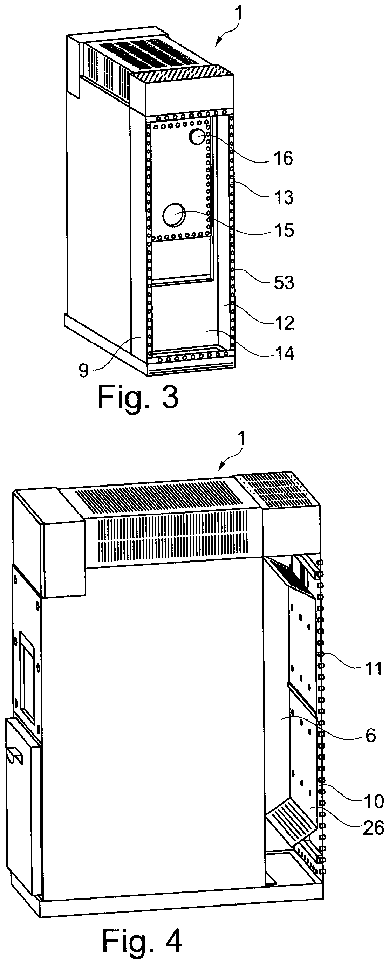

**Figures 2** **and** **3** show schematic views of the GIS 1. **Figure 2** shows a schematic view of the GIS 1 having a first door unit 10, a second door unit 11 and a first wall unit 9 in the form of a first side wall. **Figure 3** shows a schematic view of the GIS 1 without the first door unit 10 and without the second door unit 11. As can be seen in **Figure 3****,** the exhaust gas duct 6 comprises a second wall unit 12 in the form of a second side wall being arranged opposite to the first wall unit 9. A frame unit 13 is arranged between the first wall unit 9 and the second wall unit 12.

The first wall unit 9 and the second wall unit 12 are made of stainless steel. However, the invention is not restricted to the use of stainless steel for the first wall unit 9 and the second wall unit 12. Rather, any material suitable for the first wall unit 9 and the second wall unit 12 may be used for the invention.

The frame unit 13 is arranged between the first wall unit 9 and the second wall unit 12 and is attached to both the first wall unit 9 and the second wall unit 12.

The exhaust gas duct 6 comprises an interior space 14 composed by the first wall unit 9, the second wall unit 12 and the frame unit 13. As can be seen in **Figure 3****,** the removable tank wall 8 of the gas-insulated tank 4 is directed to and is adjacent to the interior space 14 of the exhaust gas duct 6. The removable tank wall 8 of the gas-insulated tank 4 comprises a pressure relief unit 15 in the form of a valve. The pressure relief unit 15 is used for guiding the exhaust gas out of the gas-insulated tank 4 into the exhaust gas duct 6 such that the exhaust gas is guided to the absorber and outlet 7 of the exhaust gas duct 6 and out of the GIS 1.

The removable tank wall 8 of the gas-insulated tank 4 also has a polymeric component 16 comprising at least one communication device. The communication device is connected to at least one sensor 17 being arranged in the gas-insulated tank 4 (see **Figure 1**). The communication device may be any kind of communication device such as a wireless communication device or a cable guided from the polymeric component 16 to a control unit. The sensor 17 is used for predictive maintenance online monitoring of the GIS 1 and monitoring its quality status.

The first door unit 10 and the second door unit 11 are now described in further detail using **Figures 4 to 8****.**

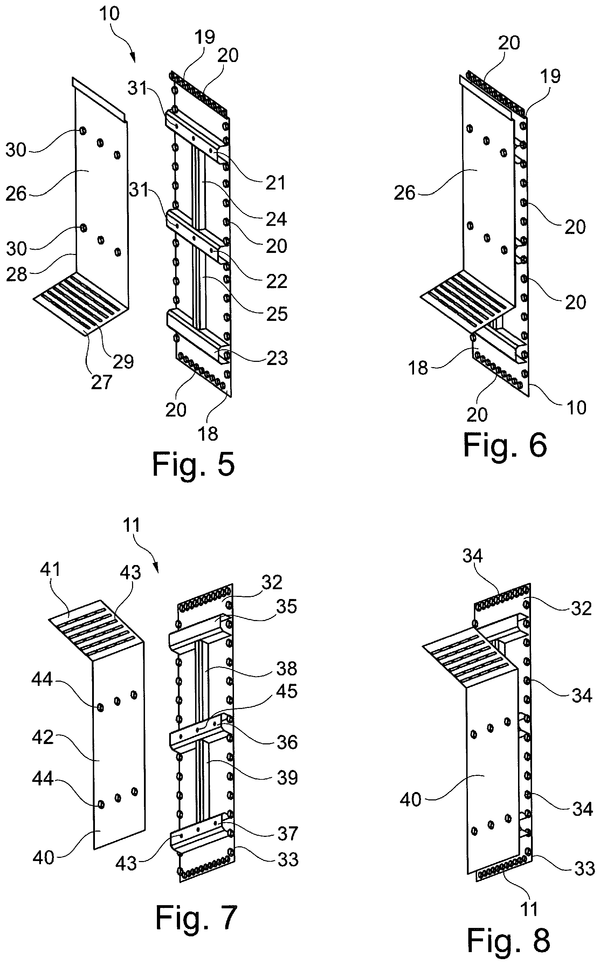

**Figures 5 and 6** show the first door unit 10. The first door unit 10 comprises a first side 18 and a second side 19. The first side 18 and the second side 19 of the first door unit 10 are opposite to each other. The first side 18 of the first door unit 10 is directed to the interior space 14 and is adjacent to the interior space 14. The second side 19 of the first door unit 10 is arranged at a first side of the frame unit 13 which will be explained in detail further below. The first side 18 of the first door unit 10 comprises first holding devices 20 in the form of nuts of a first releasable mounting unit. The first holding devices 20 are welded onto the first side 18 of the first door unit 10 along the edge of the first side 18 of the first door unit 10.

The first door unit 10 comprises a first stiffener 21, a second stiffener 22 and a third stiffener 23 at the first side 18 of the first door unit 10. The first stiffener 21, the second stiffener 22 and the third stiffener 23 of the first door unit 10 are arranged parallelly to each other and at a distance to each other. Moreover, they are arranged horizontally at the first side 18 of the first door unit 10. In other words, the first stiffener 21, the second stiffener 22 and the third stiffener 23 of the first door unit 10 are arranged such that their longitudinal axes extend along a first extension of the first side 18 of the first door unit 10, wherein the first extension is shorter than a second extension of the first side 18 of the first door unit 10, the second extension being oriented perpendicularly to the first extension. Additionally, a fourth stiffener 24 of the first door unit 10 is arranged between the first stiffener 21 and the second stiffener 22 of the first door unit 10. The longitudinal axis of the fourth stiffener 24 is arranged along the second extension of the first side 18 of the first door unit 10. In other words, the fourth stiffener 24 is vertically arranged at the first side 18 of the first door unit 10. Moreover, a fifth stiffener 25 is arranged between the second stiffener 22 and the third stiffener 23 of the first door unit 10. A longitudinal axis of the fifth stiffener 25 is arranged along the second extension of the first side 18 of the first door unit 10. In other words, the fifth stiffener 25 is vertically arranged at the first side 18 of the first door unit 10.

A first baffle unit 26 is arranged at the first stiffener 21 and the second stiffener 22 using a releasable connection. The releasable connection comprises bolts 30 being arranged at a plate 28 of the first baffle unit 26 and threads 31 being arranged at the first stiffener 21 and at the second stiffener 22 of the first door unit 10. The first baffle unit 26 comprises a first end 27 having openings 29. The first end 27 is arranged at an angle of about 95° to 120° with respect to the plate 28. The first end 27 may be a perforated end comprising a perforation. The openings 29 of the first end 27 are embodied as slots. However, the invention is not restricted to slots as the openings. Rather, any kind of opening which is suitable for the invention may be used. The first end 27 reduces the energy of the exhaust gas while acting as an energy absorber and also reduces the velocity of the exhaust gas.

The first baffle unit 26 may have several functions. On the one hand, the first baffle unit 26 is a mechanical support to withstand the pressure during an internal arc event in the GIS 1. On the other hand, the first baffle unit 26 may be a sacrificing electrode which burns out during an internal arc event in the GIS 1, thereby protecting the first door unit 10. The burning out of the first baffle unit 26 absorbs the energy of the exhaust gas dissipating through the exhaust gas duct 6 during an internal arc event in the GIS 1, thereby reducing the temperature and the velocity of the exhaust gas being guided through the exhaust gas duct 6. Moreover, the first baffle unit 26 also deflects and guides the exhaust gas in such a way that the exhaust gas flows through the exhaust gas duct 6.

**Figures 7 and 8** show the second door unit 11. The second door unit 11 comprises a first side 32 and a second side 33. The first side 32 and the second side 33 of the second door unit 11 are opposite to each other. The first side 32 of the second door unit 11 is directed to the interior space 14 and is adjacent to the interior space 14. The second side 33 of the second door unit 11 is arranged at the first side of the frame unit 13 which will be explained in detail further below. The first side 32 of the second door unit 11 comprises second holding devices 34 in the form of nuts of a second releasable mounting unit which are welded onto the first side 32 of the second door unit 11 along the edge of the first side 32 of the second door unit 11.

The second door unit 11 comprises a first stiffener 35, a second stiffener 36 and a third stiffener 37 at the first side 32 of the second door unit 11. The first stiffener 35, the second stiffener 36 and the third stiffener 37 of the second door unit 11 are arranged parallelly to each other and at a distance to each other. Moreover, they are arranged horizontally at the first side 32 of the second door unit 11. In other words, the first stiffener 35, the second stiffener 36 and the third stiffener 37 are arranged such that their longitudinal axes extend along a first extension of the first side 32 of the second door unit 11, wherein the first extension is shorter than a second extension of the first side 32 of the second door unit 11, the second extension being oriented perpendicularly to the first extension. Additionally, a fourth stiffener 38 is arranged between the first stiffener 35 and the second stiffener 36 of the second door unit 11. The longitudinal axis of the fourth stiffener 38 is arranged along the second extension of the first side 32 of the second door unit 11. In other words, the fourth stiffener 38 is vertically arranged at the first side 32 of the second door unit 11. Moreover, a fifth stiffener 39 is arranged between the second stiffener 36 and the third stiffener 37 of the second door unit 11. A longitudinal axis of the fifth stiffener 39 of the second door unit 11 is arranged along the second extension of the first side 32 of the second door unit 11. In other words, the fifth stiffener 39 is vertically arranged at the first side 32 of the second door unit 11.

A second baffle unit 40 is arranged at the second stiffener 36 and the third stiffener 37 of the second door unit 11 using a releasable connection. The releasable connection comprises bolts 44 being arranged at a plate 42 of the second baffle unit 40 and threads 45 being arranged at the second stiffener 36 and at the third stiffener 37. The second baffle unit 40 comprises a second end 41 comprising openings 43. The second end 40 is arranged at an angle of about 95° to 120° with respect to the plate 42. The second end 41 may be a perforated end. The openings 43 of the second end 41 are embodied as slots. However, the invention is not restricted to slots as the openings. Rather, any kind of opening which is suitable for the invention may be used. The second end 41 of the second baffle unit 40 reduces the energy of the exhaust gas while acting as an energy absorber and also reduces the velocity of the exhaust gas.

The second baffle unit 40 may have several functions. On the one hand, the second baffle unit 40 is a mechanical support to withstand the pressure during an internal arc event in the GIS 1. On the other hand, the second baffle unit 40 may be a sacrificing electrode which burns out during an internal arc event in the GIS 1, thereby protecting the second door unit 11. The burning out of the second baffle unit 40 absorbs the energy of the exhaust gas dissipating through the exhaust gas duct 6 during an internal arc event in the GIS 1, thereby reducing the temperature and the velocity of the exhaust gas being guided through the exhaust gas duct 6. Moreover, the second baffle unit 40 also deflects and guides the exhaust gas in such a way that the exhaust gas flows through the exhaust gas duct 6.

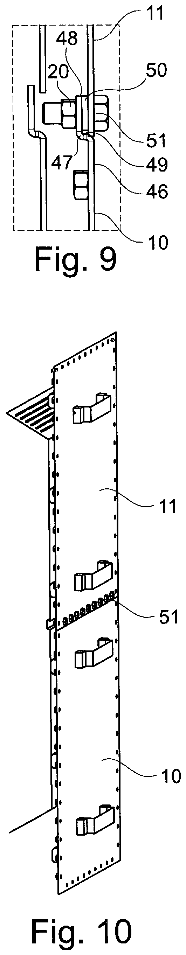

As mentioned above, the second door unit 11 is arranged at the first door unit 10. This is shown in **Figure 9****.** The first door unit 10 comprises a door unit surface 46, a first door connecting unit 47 and a second door connecting unit 48. The first door connecting unit 47 and the door unit surface 46 are arranged to each other at a first angle different to 0° and 180°, for example 90° or approximately 90°. Moreover, the first door connecting unit 47 and the second door connecting unit 48 are arranged to each other at a second angle being different to 0° and 180°, for example 90° or approximately 90°. The first door connecting unit 47 and the second door connecting unit 48 form of seating area 49. A sealing unit 50 is arranged in the seating area 49 between the first door connecting unit 47, the second door connecting unit 48 and the second door unit 11. The sealing unit 50 may be any kind of sealing unit, such as a silicone sealing unit, a rubber sealing unit, a mica sealing unit and/or a graphite sealing unit. The second door unit 11 is mounted to the first door unit 10 by using thread units 51 in the form of bolts which are guided through holes in the second door unit 11 and which are inserted into the first holding devices 20 in the form of nuts, wherein the first holding devices 20 are arranged at the edge of the first side 18 of the first door unit 10. **Figure 10** shows the second door unit 11 being mounted to the first door unit 10 as explained with respect to **Figure 9****.**

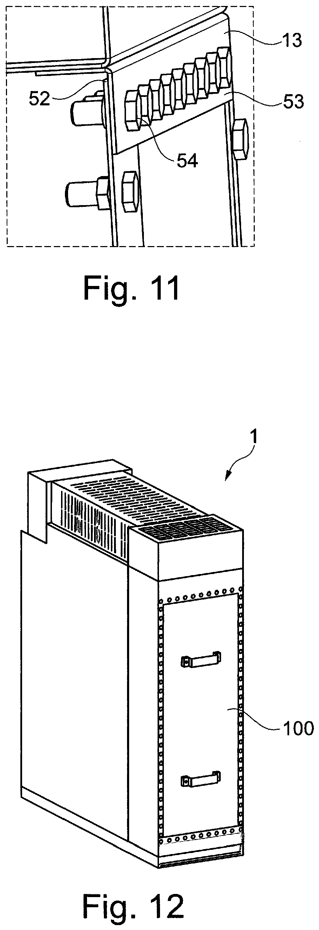

As shown in **Figures 3** **and** **11****,** the frame unit 13 has a first side 52 and a second side 53, wherein the first side 52 of the frame unit 13 is opposite to the second side 53 of the frame unit 13. The first side 52 of the frame unit 13 is directed to the interior space 14 and is adjacent to the interior space 14. The second side 53 of the frame unit 13 is an outer side of the frame unit 13 and comprises thread units 54 in the form of bolts. The first door unit 10 and the second door unit 11 are arranged at the first side 52 of the frame unit 13. In particular, the second side 19 of the first door unit 10 and the second side 33 of the second door unit 11 are arranged at the first side 52 of the frame unit 13.

The first door unit 10 and the second door unit 11 are mounted to the first side 52 of the frame unit 13 by using the thread units 54 in the form of bolts. For mounting the first door unit 10, the thread units 54 are guided through holes in the frame unit 13 from the second side 53 of the frame unit 13 to the first holding devices 20 in the form of nuts, wherein the first holding devices 20 are arranged at the edge of the first side 18 of the first door unit 10. For mounting the second door unit 11, the thread units 54 are guided through holes in the frame unit 13 from the second side 53 of the frame unit 13 to the second holding devices 34 in the form of nuts, wherein the second holding devices 34 are arranged at the edge of the first side 32 of the second door unit 11.

For mounting the first door unit 10 and the second door unit 11 to the exhaust gas duct 6, the first door unit 10 is inserted into the interior space 14 of the exhaust gas duct 6 first. After the first door unit 10 has been arranged in the interior space 14, the second door unit 11 is inserted into the interior space 14. When the first door unit 10 and the second door unit 11 are arranged in the interior space 14, the second door unit 11 is arranged at the first door unit 10 as described above. After the second door unit 11 has been arranged at the first door unit 10, the first door unit 10 and the second door unit 11 are arranged at the first side 52 of the frame unit 13 and are mounted to the first side 52 of the frame unit 13 as mentioned above.

As mentioned above, the gas-insulated tank 4 is filled with an environmentally friendly gas in terms of global warming. In particular, no SF₆ is used. The first door unit 10 and the second door unit 11 may be removed from the frame unit 13. When having removed the first door unit 10 and the second door unit 11, access is provided to the removable tank wall 8 of the gas-insulated tank 4 of the GIS 1. The removable tank wall 8 of the gas-insulated tank 4 may be removed or opened without any difficult actions for preventing gas from flowing out of the gas-insulated tank 4 when the GIS is at a out-of-service condition for maintenance and repair. However, care may be taken to release gas pressure out of the gas-insulated tank 4 before removing or opening the removable tank wall 8. Since the gas handling is simpler than known from the prior art, there is a possibility for regular maintenance of components of the GIS 1 being arranged in the gas-insulated tank 4, for example disconnector units and/or vacuum interrupters and/or the sensors 17. Therefore, the invention may provide enhancement of the lifetime of the GIS 1.

Moreover, the invention provides for using sensors 17 in the gas-insulated tank 4 of the GIS 1 which may be easily maintained or replaced. The sensors 17 provide for predictive maintenance online monitoring of the GIS 1 and monitoring its quality status.

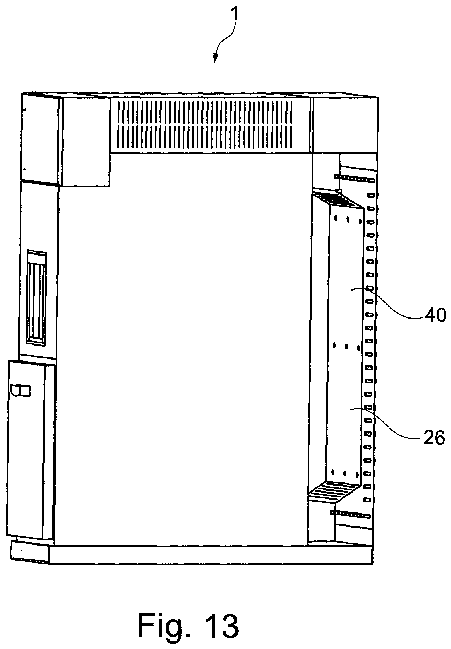

**Figures 12** **and** **13** show a second embodiment of the GIS 1. The GIS 1 according to the second embodiment shown in **Figures 12** **and** **13** comprises all features of the first embodiment of the GIS 1 as explained above. However, instead of having the first door unit 10 and the second door unit 11, the GIS 1 of the second embodiment of the GIS 1 comprises a single door unit 100 being arranged at the first side 52 of the frame unit 13. The single door unit 100 comprises the first baffle unit 26 and the second baffle unit 40.

Other embodiments of the invention will be apparent to those skilled in the art from consideration of the specification and/or an attempt to put into practice the invention disclosed herein. It is intended that the specification and examples be considered as exemplary only, with the true scope and spirit of the invention being indicated by the following claims.

### List of reference signs

- 1: gas-insulated switchgear
- 2: low-voltage compartment
- 3: cable compartment
- 4: gas-insulated tank
- 5: busbar compartment
- 6: exhaust gas duct
- 7: absorber and outlet
- 8: removable tank wall
- 9: first wall unit
- 10: first door unit
- 11: second door unit
- 12: second wall unit
- 13: frame unit
- 14: interior space
- 15: pressure relief unit
- 16: polymeric component
- 17: sensors
- 18: first side of first door unit
- 19: second side of first door unit
- 20: first holding devices
- 21: first stiffener of first door unit
- 22: second stiffener of first door unit
- 23: third stiffener of first door unit
- 24: fourth stiffener of first door unit
- 25: fifth stiffener of first door unit
- 26: first baffle unit
- 27: first end of first baffle unit
- 28: plate of first baffle unit
- 29: openings (slots)
- 30: bolts
- 31: threads
- 32: first side of second door unit
- 33: second side of second door unit
- 34: second holding devices
- 35: first stiffener of second door unit
- 36: second stiffener of second door unit
- 37: third stiffener of second door unit
- 38: fourth stiffener of second door unit
- 39: fifth stiffener of second door unit
- 40: second baffle unit
- 41: second end of second baffle unit
- 42: plate of second baffle unit
- 43: openings (slots)
- 44: bolts
- 45: threads
- 46: door unit surface of first door unit
- 47: first door connecting unit
- 48: second door connecting unit
- 49: seating area
- 50: sealing unit
- 51: thread units
- 52: first side of frame unit
- 53: second side of frame unit
- 54: thread units
- 100: single door unit

## Claims

1. Exhaust gas duct (6) for a gas-insulated switchgear (1), comprising
- at least one first wall unit (9),
- at least one second wall unit (12),
- at least one frame unit (13) arranged at the first wall unit (9) and at the second wall unit (12),
- at least one interior space (14) composed by the first wall unit (9), the second wall unit (12) and the frame unit (13),
wherein
- the frame unit (13) has a first side (52) and a second side (53), wherein the first side (52) of the frame unit (13) is opposite to the second side (53) of the frame unit (13), wherein the first side (52) of the frame unit (13) is directed to the interior space (14) and is adjacent to the interior space (14), and wherein
- at least one door unit (10, 11, 100) is arranged at the first side (52) of the frame unit (13).

2. Exhaust gas duct (6) according to claim 1, wherein the door unit (10, 11, 100) is exclusively arranged at the first side (52) of the frame unit (13).

3. Exhaust gas duct (6) according to claim 1 or 2, wherein
- the door unit (10, 11, 100) comprises a first side (18, 32) and a second side (19, 33),
- the first side (18, 32) and the second side (19, 33) of the door unit (10, 11, 100) are opposite to each other,
- the first side (18, 32) of the door unit (10, 11, 100) is directed to the interior space (14) and is adjacent to the interior space (14),
- the second side (19, 33) of the door unit (10, 11, 100) is arranged at the first side (52) of the frame unit (13), and wherein
- the first side (18, 32) of the door unit (10, 11, 100) comprises at least one holding device (20, 34) of a releasable mounting unit.

4. Exhaust gas duct (6) according to claim 3, wherein the exhaust gas duct (6) comprises at least one of the following:
(i) the holding device (20, 34) is at least one of: a thread unit and a nut;
(ii) the holding device (20, 34) is welded to the first side of the door unit;
(iii) the holding device (20, 34) is mechanically arranged at the first side (18, 32) of the door unit (10, 11, 100).

5. Exhaust gas duct (6) according to claim 3 or 4, wherein the exhaust gas duct (6) comprises one of the following:
(i) the second side (53) of the frame unit (13) comprises at least one mounting device (54) of the releasable mounting unit, wherein the mounting device (54) is arranged at the holding device (20, 34);
(ii) the second side (53) of the frame unit (13) comprises at least one mounting device (54) of the releasable mounting unit, wherein the mounting device (54) is arranged at the holding device (20, 34), and wherein the mounting device (54) is a bolt comprising a thread.

6. Exhaust gas duct (6) according to one of claims 3 to 5, wherein the first side (18, 32) of the door unit (10, 11, 100) comprises one of:
- at least one first stiffener (21 to 25, 35 to 39);
- at least one first stiffener (21 to 25, 35 to 39), wherein at least one first baffle unit (26, 40) is arranged at the first stiffener (21 to 25, 35 to 39).

7. Exhaust gas duct (6) according to one of the preceding claims, wherein
- the door unit (10) is a first door unit, wherein the holding device (20) is a first holding device and wherein the releasable mounting unit is a first releasable mounting unit, and wherein
- the exhaust gas duct (6) comprises a second door unit (11), wherein the second door unit (11) is arranged at the first side (52) of the frame unit (13).

8. Exhaust gas duct (6) according to claim 7, wherein the second door unit (11) is exclusively arranged at the first side (52) of the frame unit (13).

9. Exhaust gas duct (6) according to claim 7, wherein the exhaust gas duct (6) comprises one of the following:
(i) the second door unit (11) is arranged at the first door unit (10);
(ii) the first door unit (10) comprises a door unit surface (46), a first door connecting unit (47) and a second door connecting unit (48), wherein the first door connecting unit (47) and the door unit surface (46) are arranged to each other at a first angle different to 0° and 180°, and wherein the first door connecting unit (47) and the second door connecting unit (48) are arranged to each other at a second angle different to 0° and 180°;
(iii) the first door unit (10) comprises a door unit surface (46), a first door connecting unit (47) and a second door connecting unit (48), wherein the first door connecting unit (47) and the door unit surface (46) are arranged to each other at a first angle different to 0° and 180°, wherein the first door connecting unit (47) and the second door connecting unit (48) are arranged to each other at a second angle different to 0° and 180°, wherein the first door connecting unit (47) and the second door connecting unit (48) form a seating area (49), and wherein one of the following is given: (i) the second door unit (11) is arranged at the seating area (49) or (ii) the second door unit (11) is adjacent to the seating area (49);
(iv) the first door unit (10) comprises a door unit surface (46), a first door connecting unit (47) and a second door connecting unit (48), wherein the first door connecting unit (47) and the door unit surface (46) are arranged to each other at a first angle different to 0° and 180°, wherein the first door connecting unit (47) and the second door connecting unit (48) are arranged to each other at a second angle different to 0° and 180°, wherein the first door connecting unit (47) and the second door connecting unit (48) form a seating area (49), wherein at least one sealing unit (50) is arranged in the seating area (49), and wherein the second door unit (11) is adjacent to the seating area (49).

10. Exhaust gas duct (6) according to one of claims 7 to 9, wherein
- the second door unit (11) comprises a first side (32) and a second side (33),
- the first side (32) and the second side (33) of the second door unit (11) are opposite to each other,
- the first side (32) of the second door unit (11) is directed to the interior space (14) and is adjacent to the interior space (14),
- the second side (33) of the second door unit (11) is arranged at the first side (52) of the frame unit (13), and wherein
- the first side (32) of the second door unit (11) comprises at least one second holding device (34) of a second releasable mounting unit.

11. Exhaust gas duct (6) according to claim 10, wherein the exhaust gas duct (6) comprises at least one of the following:
(i) the second holding device (34) is at least one of: a thread unit and a nut;
(ii) the second holding device (34) is welded to the first side (32) of the second door unit (11);
(iii) the second holding device (34) is mechanically arranged at the first side (32) of the second door unit (11).

12. Exhaust gas duct (6) according to claim 10 or 11, wherein the exhaust gas duct (6) comprises one of the following:
(i) the second side (53) of the frame unit (13) comprises at least one second mounting device (54) of the second releasable mounting unit, wherein the second mounting device (54) is arranged at the second holding device (34);
(ii) the second side (53) of the frame unit (13) comprises at least one second mounting device (54) of the second releasable mounting unit, wherein the second mounting device (54) is arranged at the second holding device (34), and wherein the second mounting device (54) is a bolt comprising a thread.

13. Exhaust gas duct (6) according to one of claims 10 to 12, wherein the first side (32) of the second door unit (11) comprises one of:
- at least one second stiffener (35 to 39);
- at least one second stiffener (35 to 39), wherein at least one second baffle unit (40) is arranged at the second stiffener (35 to 39).

14. Gas-insulated switchgear (1), comprising
- at least one gas-insulated tank (4) comprising a removable tank wall (8), and comprising
- at least one exhaust gas duct (6) according to one of the preceding claims, wherein the removable tank wall (8) is directed to and is adjacent to the interior space (14).

15. Gas-insulated switchgear (1) according to claim 14, wherein the gas-insulated switchgear (1) comprises at least one of:
(i) the removable tank wall (8) has at least one pressure relief unit (15);
(ii) the removable tank wall (8) has at least one polymeric component (16) comprising at least one communication device;
(iii) the removable tank wall (8) is releasably arranged at the gas-insulated tank (4);
(iv) the gas-insulated tank (4) comprises at least one sensor (17).
